(19) Europäisches Patentamt
European Patent Office
Office européen des brevets

(11) EP 3 351 578 A1

(12) **EUROPEAN PATENT APPLICATION**
published in accordance with Art. 153(4) EPC

(43) Date of publication:
**25.07.2018 Bulletin 2018/30**

(21) Application number: **16846431.1**

(22) Date of filing: **13.09.2016**

(51) Int Cl.:
*C08G 64/42* (2006.01) *B29C 47/00* (2006.01)
*B29C 47/14* (2006.01) *B29L 7/00* (2006.01)

(86) International application number:
**PCT/JP2016/076903**

(87) International publication number:
**WO 2017/047560 (23.03.2017 Gazette 2017/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.09.2015 JP 2015184847**

(71) Applicants:
- **Mitsubishi Gas Chemical Company, Inc.**
**Tokyo 100-8324 (JP)**
- **MGC Filsheet Co., Ltd.**
**Saitama 359-1164 (JP)**

(72) Inventors:
- **SUGIYAMA, Genki**
**Tokyo 125-8601 (JP)**
- **SHIMIZU, Hidetaka**
**Kamisu-shi**
**Ibaraki 314-0102 (JP)**
- **NAKAYASU, Yasuyoshi**
**Tokyo 125-8601 (JP)**
- **OGASAWARA, Ken**
**Shirakawa-shi**
**Fukushima 961-0005 (JP)**
- **NAKASEKO, Hiroshi**
**Tokyo 125-8601 (JP)**
- **NII, Yuusuke**
**Kamisu-shi**
**Ibaraki 314-0102 (JP)**

(74) Representative: **Hoffmann Eitle**
**Patent- und Rechtsanwälte PartmbB**
**Arabellastraße 30**
**81925 München (DE)**

# (54) POLYCARBONATE RESIN, METHOD FOR PRODUCING SAME, MOLDED ARTICLE, SHEET, AND FILM FORMED USING SAME, AND METHOD FOR PRODUCING SAME

(57) The present invention provides a polycarbonate resin having a terminal structure derived from a monovalent phenol represented by general formula (1), and a constitutional unit derived from a divalent phenol, wherein the specific alcohol content is 500 ppm or less.

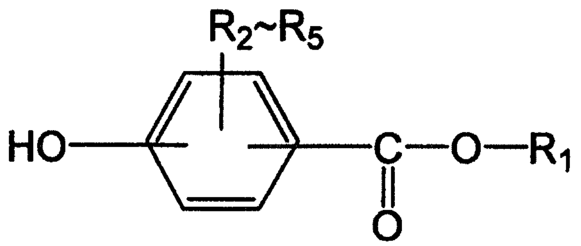
(1)

EP 3 351 578 A1

**Description**

TECHNICAL FIELD

The present invention relates to a polycarbonate resin which has excellent moist heat resistance and can suppress the generation of gas and contamination of an extrusion roll during producing a sheet/film and a method for producing the same, and a molded product, a sheet and a film obtained by using the same and a method for producing each of them.

BACKGROUND ART

Polycarbonate resins are not only excellent in transparency, but also more excellent in processability and impact resistance compared to glasses, and in addition, have a lower risk of poisonous gas compared to other plastic materials. Therefore, polycarbonate resins are widely used in various fields, and for example, used as materials for molded products, sheets and films.
Patent Document 1 discloses that, among polycarbonates, a polycarbonate obtained by reacting a p-hydroxybenzoic acid alkyl ester as an end terminator has particularly higher melt flowability compared to general polycarbonates.
Patent Document 2 discloses that, among polycarbonates, a polycarbonate obtained by reacting a p-hydroxybenzoic acid alkyl ester as an end terminator has a particularly smaller rate of change in the coefficient of hygroscopic expansion caused by change in environment humidity compared to general polycarbonates.

PRIOR ART DOCUMENTS

PATENT DOCUMENTS

Patent Document 1: Japanese Examined Patent Application Publication No. H07-025871
Patent Document 2: International Publication WO2007/132874 pamphlet

SUMMARY OF THE INVENTION

PROBLEMS TO BE SOLVED BY THE INVENTION

However, the polycarbonate obtained by reacting a p-hydroxybenzoic acid alkyl ester as an end terminator as described in Patent Documents 1 and 2 may have insufficient moist heat resistance. For example, it may be deteriorated in a short period of time when used in an outdoor environment. Further, there are problems that the generation of gas in an extruder and a die and contamination of an extrusion roll at the time of extrusion molding are severe, and that the productivity of sheets or films is low.

MEANS FOR SOLVING THE PROBLEMS

The present inventors diligently made researches in order to solve the aforementioned problems, and found that, by adjusting the content of a specific alcohol in a polycarbonate obtained by reacting a specific p-hydroxybenzoic acid alkyl ester as an end terminator within a specific range, moist heat resistance can be improved and the generation of gas in an extruder and a die and contamination of an extrusion roll at the time of extrusion molding can be suppressed, and thus the present invention was achieved.
Specifically, the present invention relates to a polycarbonate resin and a method for producing the same, and a molded product, a sheet and a film obtained by using the same and a method for producing each of them as described below.

[1] A polycarbonate resin which has: a terminal structure derived from a monovalent phenol represented by general formula (1); and a constitutional unit derived from a divalent phenol, wherein the content of an alcohol represented by general formula (2) is 500 ppm or less:

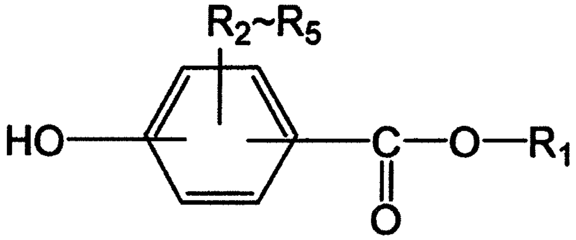

(1)

wherein in general formula (1):

$R_1$ represents an alkyl group having 8 to 36 carbon atoms or an alkenyl group having 8 to 36 carbon atoms; and $R_2$ to $R_5$ each independently represent hydrogen, halogen, an alkyl group having 1 to 20 carbon atoms which may have a substituent, or an aryl group having 6 to 12 carbon atoms which may have a substituent,

$R_1$-OH (2)

and wherein in general formula (2), $R_1$ is the same as $R_1$ in general formula (1).

[2] The polycarbonate resin according to item [1], which has a viscosity average molecular weight of 12,000 to 35,000.
[3] The polycarbonate resin according to item [1] or [2], wherein the divalent phenol is represented by general formula (3):

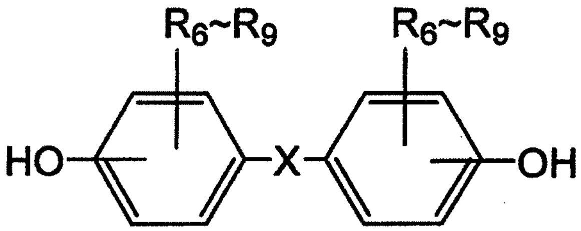

(3)

wherein in general formula (3):

$R_6$ to $R_9$ each independently represent hydrogen, halogen, nitro, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent; and
X represents -O-, -S-, -SO-, $-SO_2-$, -CO-, or a divalent group represented by any of formulae (4) to (7):

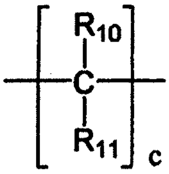

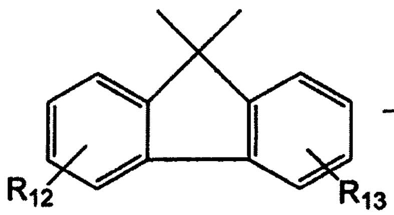

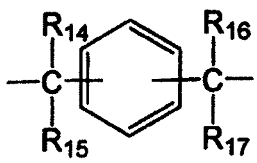

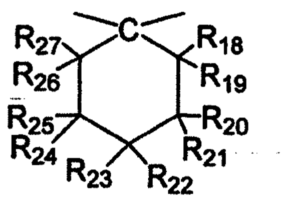

(4) (5) (6) (7)

wherein in formulae (4) to (7):

$R_{10}$ and $R_{11}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,

$R_{10}$ and $R_{11}$ are bonded to each other to form a carbocyclic ring having 3 to 20 carbon atoms or a heterocyclic ring having 1 to 20 carbon atoms;
c represents an integer of 0 to 20;
$R_{12}$ and $R_{13}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{12}$ and $R_{13}$ are bonded to each other to form a carbocyclic ring having 3 to 20 carbon atoms or a heterocyclic ring having 1 to 20 carbon atoms;
$R_{14}$ to $R_{17}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{14}$ and $R_{15}$, and $R_{16}$ and $R_{17}$, respectively, are bonded to each other to form a carbocyclic ring having 3 to 20 carbon atoms or a heterocyclic ring having 1 to 20 carbon atoms; and
$R_{18}$ to $R_{27}$ each independently represent a hydrogen atom or an alkyl group having 1 to 3 carbon atoms, and at least one of $R_{18}$ to $R_{27}$ is an alkyl group having 1 to 3 carbon atoms.

[4] A method for producing a polycarbonate resin, which is characterized in that a reaction raw material containing a monovalent phenol represented by general formula (1), wherein the content of an alcohol represented by general formula (2) is 5000 ppm or less, a divalent phenol, and a carbonate bonding agent is reacted:

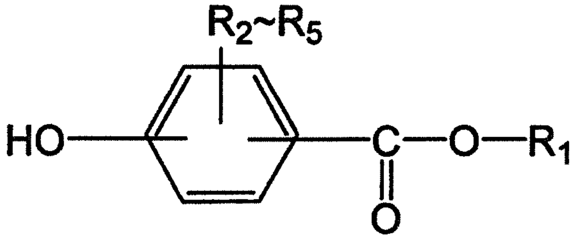
(1)

wherein in general formula (1):

$R_1$ represents an alkyl group having 8 to 36 carbon atoms or an alkenyl group having 8 to 36 carbon atoms; and $R_2$ to $R_5$ each independently represent hydrogen, halogen, an alkyl group having 1 to 20 carbon atoms which may have a substituent, or an aryl group having 6 to 12 carbon atoms which may have a substituent,

$R_1$-OH (2)

and wherein in general formula (2), $R_1$ is the same as $R_1$ in general formula (1).

[5] The method according to item [4], wherein the divalent phenol is represented by general formula (3):

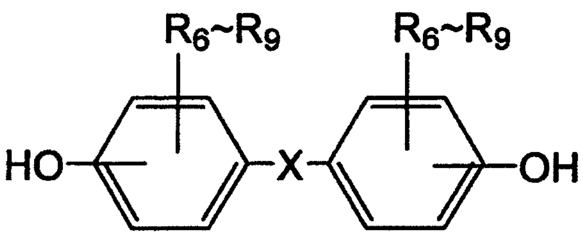
(3)

wherein in general formula (3):

$R_6$ to $R_9$ each independently represent hydrogen, halogen, nitro, an alkyl group having 1 to 20 carbon atoms which may have a substituent, an alkoxy group having 1 to 5 carbon atoms which may have a substituent, an

aryl group having 6 to 12 carbon atoms which may have a substituent, an aralkyl group having 7 to 17 carbon atoms which may have a substituent, or an alkenyl group having 2 to 15 carbon atoms which may have a substituent; and

X represents -O-, -S-, -SO-, $-SO_2-$, -CO-, or a divalent group represented by any of formulae (4) to (7):

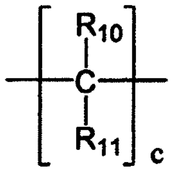
(4)

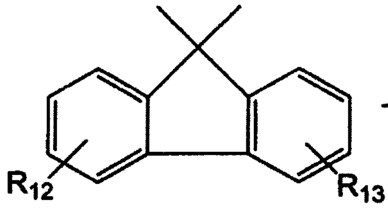
(5)

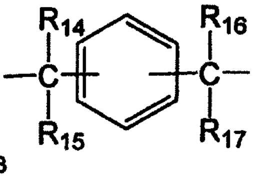
(6)

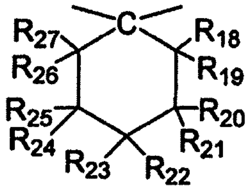
(7)

wherein in formulae (4) to (7):

$R_{10}$ and $R_{11}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{10}$ and $R_{11}$ are bonded to each other to form a carbocyclic ring having 3 to 20 carbon atoms or a heterocyclic ring having 1 to 20 carbon atoms;
c represents an integer of 0 to 20;
$R_{12}$ and $R_{13}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{12}$ and $R_{13}$ are bonded to each other to form a carbocyclic ring having 3 to 20 carbon atoms or a heterocyclic ring having 1 to 20 carbon atoms;
$R_{14}$ to $R_{17}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{14}$ and $R_{15}$, and $R_{16}$ and $R_{17}$, respectively, are bonded to each other to form a carbocyclic ring having 3 to 20 carbon atoms or a heterocyclic ring having 1 to 20 carbon atoms; and
$R_{18}$ to $R_{27}$ each independently represent a hydrogen atom or an alkyl group having 1 to 3 carbon atoms, and at least one of $R_{18}$ to $R_{27}$ is an alkyl group having 1 to 3 carbon atoms.

[6] A molded product obtained by molding the polycarbonate resin according to any one of items [1] to [3].
[7] A sheet or film obtained by molding the polycarbonate resin according to any one of items [1] to [3].
[8] The sheet or film according to item [7], wherein said molding is extrusion molding.
[9] A method for producing a sheet or film, which comprises molding and processing the polycarbonate resin according to any one of items [1] to [3].

ADVANTAGEOUS EFFECT OF THE INVENTION

The polycarbonate resin of the present invention can improve moist heat resistance. In addition, the polycarbonate resin of the present invention can suppress the generation of gas in an extruder and a die and contamination of an extrusion roll during extrusion molding. Therefore, according to the present invention, a polycarbonate having high moist heat resistance can be provided, and a sheet or film can be provided with high productivity.

BEST MODE FOR CARRYING OUT THE INVENTION

Hereinafter, the present invention will be described in detail. Note that the present invention is not limited to

the below-described embodiments, and can be arbitrarily changed and then carried out without departing from the gist of the present invention. Note that all the documents and publications cited herein are incorporated herein by reference in their entireties regardless of purposes thereof. In addition, the contents disclosed in the claims, specification, drawings and abstract of Japanese Patent Application No. 2015-184847 (filed on September 18, 2015), to which priority is claimed by the present application, are incorporated herein by reference in their entireties.

<Polycarbonate resin>

The polycarbonate resin of the present invention includes a polycarbonate resin having a terminal structure derived from a monovalent phenol represented by the aforementioned general formula (1) and a constitutional unit derived from a divalent phenol. The monovalent phenol represented by the aforementioned general formula (1) is an end terminator which is used in the production of the polycarbonate resin. A p-hydroxybenzoic acid alkyl ester of general formula (1) which is used as an end terminator is produced, for example, by a condensation reaction between a p-hydroxybenzoic acid that is a carboxylic acid and an alkyl alcohol of general formula (2). The produced p-hydroxybenzoic acid alkyl ester usually contains an alkyl alcohol component as an impurity derived from the raw material of the end terminator. Accordingly, a polycarbonate resin produced using a p-hydroxybenzoic acid alkyl ester as an end terminator also usually contains a certain amount of an alkyl alcohol of general formula (2) as an impurity. Note that the above-described method for producing a p-hydroxybenzoic acid alkyl ester is provided only for illustrative purposes, and the method for producing the monovalent phenol represented by general formula (1) is not particularly limited.

The present inventors found that, surprisingly, the presence of an alkyl alcohol in the polycarbonate resin affects moist heat resistance and extrusion moldability of the resin. Further, the present inventors found that, by adjusting the content of the alkyl alcohol as an impurity contained in the polycarbonate resin within a specific range, moist heat resistance can be improved and the generation of gas in an extruder and a die and contamination of an extrusion roll at the time of extrusion molding can be suppressed. Specifically, the polycarbonate resin of the present invention is characterized in that the content of the alcohol represented by general formula (2) is 500 ppm or less.

The content of the alcohol of general formula (2) in the polycarbonate resin of the present invention is preferably 1 ppm to 500 ppm from the viewpoint of productivity of sheets and films. The content of the alcohol of general formula (2) in the polycarbonate resin of the present invention is more preferably 1 ppm to 300 ppm, and even more preferably 1 ppm to 200 ppm.

In terms of purification techniques, it is difficult to adjust the content of the alcohol of general formula (2) in the polycarbonate resin to less than 1 ppm. Further, even if the content is less than 1 ppm, there is no significant difference of physical properties between the case where the content is less than 1 ppm and the case where the content is 1 ppm to 200 ppm.

When the content of the alcohol of general formula (2) in the polycarbonate resin is more than 500 ppm, moist heat resistance of the polycarbonate resin may be poor. In addition, the generation of gas in an extruder and a die and contamination of an extrusion roll during extrusion molding may be severe, and the productivity may be significantly reduced. When the content of the alcohol of general formula (2) in the polycarbonate resin is 300 ppm or less, moist heat resistance of the polycarbonate resin is further improved, the generation of gas and contamination of a roll are suppressed, and the productivity of films is further improved. When the content of the alcohol is 200 ppm or less, it is particularly preferred from the viewpoint of moist heat resistance of the polycarbonate resin and productivity of films.

The content of the alcohol of general formula (2) in the polycarbonate resin can be measured using a high performance liquid chromatography time-of-flight mass spectrometer (LC-Tof-MS). Examples of measurement conditions are as described below.

<Measurement conditions of LC-Tof-MS>

- LC conditions for measurement of monovalent phenol (end terminator)

LC: Waters Acquity UPLC H-Class
Column: SSC PEGASIL C4 (inner diameter: 4.6 mm, length: 250 mm, particle diameter: 5 μm)
Temperature: 40°C
Flow rate: 1.0 mL/min
Detector: PDA (190 to 400 nm)
Injection amount: 25 μL
Eluant: $H_2O$/MeCN = 2/8 (isocratic)

- LC conditions for measurement of polycarbonate resin

LC: Waters Acquity UPLC H-Class
Column: SSC PEGASIL C4
(inner diameter: 4.6 mm, length: 250 mm, particle diameter: 5 μm)
Temperature: 40°C
Flow rate: 1.0 mL/min
Detector: PDA (190 to 400 nm)
Injection amount: 5 μL
Eluant: A: $H_2O$, B: MeCN, C: THF

Table 1

| Gradient program (unit: %) | | | |
|---|---|---|---|
| time | A | B | C |
| 0.00 | 20 | 80 | 0 |
| 12.00 | 20 | 80 | 0 |
| 12.01 | 0 | 0 | 100 |
| 25.00 | 0 | 0 | 100 |

- MS conditions for measurement of monovalent phenol (end terminator) and polycarbonate resin

MS: Waters Xevo G2-S Tof
Scan range/speed: 50 to 1200/1.0 sec
Ionization method: APCI (+)
Analysis mode: Sensitivity mode
Dynamic range: Normal
Corona current: 3 μA
Sampling cone voltage: 30 V
Source Offset: 80
Collision energy: off
Source temperature: 150°C
IonSabreProbe temperature: 500°C
Cone gas flow rate: 50 L/min
Desolvation gas flow rate: 1200 L/min
Internal standard substance (mass correction): Leucine Enkephalin, 1 ng/μL
Internal standard flow rate: 10 μL/min

<Method for reducing content of alcohol>

The method for reducing the content of the alcohol of general formula (2) in the polycarbonate resin of the present invention is not particularly limited. Examples of the method include: (i) a method in which a p-hydroxybenzoic acid alkyl ester of general formula (1) that is an end terminator to be used as a reaction raw material is purified to reduce the content of the alcohol of general formula (2) contained in the end terminator; and (ii) a method in which the polycarbonate resin of the present invention is purified to reduce the content of the alcohol of general formula (2) in the polycarbonate resin. Preferred is the method of (i) in terms of purification efficiency and economic efficiency. Examples of the method of (i) include a method in which the monovalent phenol represented by general formula (1), wherein the content of the alcohol represented by general formula (2) is 5000 ppm or less, is used as the end terminator. This method will be described in detail in <Method for producing polycarbonate resin>.

<Monovalent phenol>

The polycarbonate resin of the present invention has a terminal structure derived from a monovalent phenol represented by general formula (1) below:

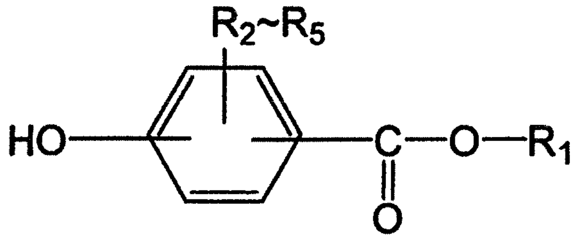
(1)

(In general formula (1):

$R_1$ represents an alkyl group having 8 to 36 carbon atoms or an alkenyl group having 8 to 36 carbon atoms; and $R_2$ to $R_5$ each independently represent hydrogen, halogen, an alkyl group having 1 to 20 carbon atoms which may have a substituent, or an aryl group having 6 to 12 carbon atoms which may have a substituent.)

Further, the monovalent phenol represented by general formula (1) is preferably a compound represented by general formula (8) below from the viewpoint of reactivity and color phase. As described above, the monovalent phenol is a raw material for the production of the polycarbonate resin of the present invention and acts as an end terminator.

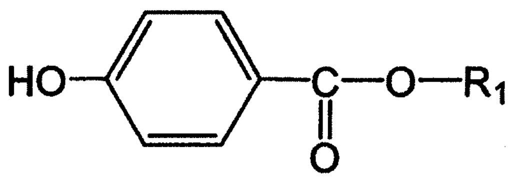
(8)

(In general formula (8), $R_1$ is the same as $R_1$ in general formula (1).)

The carbon number of $R_1$ in general formula (1) or general formula (8) is within a specific numerical range. Specifically, the upper limit of the carbon number of $R_1$ is 36, more preferably 22, and particularly preferably 18. Further, the lower limit of the carbon number of $R_1$ is 8, and more preferably 12.

Further, $R_1$ in general formula (1) or general formula (8) is preferably an alkyl group in terms of thermal stability.

Meanwhile, when the carbon number of $R_1$ in general formula (1) or general formula (8) is more than 36, the solubility of the monovalent phenol (end terminator) in an organic solvent tends to be reduced, and the productivity during producing the polycarbonate resin may be reduced.

For example, when the carbon number of $R_1$ is 36 or less, the productivity during producing the polycarbonate resin is high, and good economic efficiency is obtained. When the carbon number of $R_1$ is 22 or less, the monovalent phenol is particularly excellent in the solubility in an organic solvent, and the productivity during producing the polycarbonate resin can be significantly improved, and economic efficiency is also improved.

Meanwhile, when the carbon number of $R_1$ in general formula (1) or general formula (8) is 7 or less, there may be no clear difference of the melt flowability and the rate of change in the coefficient of hygroscopic expansion caused by change in environment humidity when compared to general polycarbonate resins. Further, there is a case where the glass transition temperature is not a low value. When the carbon number of $R_1$ is 8 or more, the melt flowability is higher, the coefficient of hygroscopic expansion caused by change in environment humidity is lower, and the glass transition temperature is lower when compared to general polycarbonate resins. When the carbon number of $R_1$ is 12 or more, these effects become more remarkable, and therefore it is preferred.

Moreover, $R_1$ in general formula (1) or general formula (8) is particularly preferably an alkyl group having 16 carbon atoms. For example, it is particularly preferred that the polycarbonate resin of the present invention has at least one terminal structure derived from a p-hydroxybenzoic acid hexadecyl ester (i.e., a compound of the above-described general formula (1), wherein $R_1$ is a 1-hexadecyl group) or a p-hydroxybenzoic acid 2-hexyldecyl ester (i.e., a compound of the above-described general formula (1), wherein $R_1$ is a 2-hexyldecyl group).

When $R_1$ is an alkyl group having 16 carbon atoms, the glass transition temperature, melt flowability, coefficient of hygroscopic expansion caused by change in environment humidity and moldability of the polycarbonate resin, and

the solubility of the monovalent phenol in an organic solvent in the production of the polycarbonate resin are excellent, and therefore it is particularly preferred.

In terms of reactivity, color phase and thermal stability, $R_2$ to $R_5$ in general formula (1) are preferably hydrogen or an alkyl group having 1 to 3 carbon atoms, and in terms of reactivity, color phase and thermal stability, each of $R_2$ to $R_5$ is particularly preferably hydrogen, that is, the above-described monovalent phenol represented by general formula (8).

Note that alkyl and alkenyl at $R_1$ to $R_5$ in general formula (1) or general formula (8) may be linear or branched.

Depending on required characteristics of materials, in the polycarbonate resin of the present invention, the main skeleton or a part of the terminal structure may be another structure, and other polycarbonate resins, and further, other transparent resins may be mixed without departing from the gist of the present invention. In the polycarbonate resin of the present invention, it is preferred that 80 mol% or more of the terminal structure is a structure derived from the monovalent phenol represented by formula (1), and it is more preferred that 90 mol% or more of the terminal structure is a structure derived from the monovalent phenol represented by formula (1), and it is particularly preferred that the amount of the structure derived from the monovalent phenol is 100 mol%.

Examples of other terminal structures which may be possessed include terminal structures derived from: phenol; an alkyl phenol such as p-cresol, o-cresol, 2,4-xylenol, p-t-butylphenol, o-allylphenol, p-allylphenol, p-hydroxystyrene, p-hydroxy-α-methylstyrene, p-propylphenol, p-cumylphenol, p-phenylphenol, o-phenylphenol, p-trifluoromethylphenol, p-nonylphenol, p-dodecylphenol, eugenol, amylphenol, hexylphenol, heptylphenol, octylphenol, nonylphenol, decylphenol, dodecylphenol, myristylphenol, palmitylphenol, stearylphenol and behenylphenol; and a p-hydroxybenzoic acid alkyl ester such as a methyl ester, ethyl ester, propyl ester, butyl ester, amyl ester, hexyl ester or heptyl ester of p-hydroxybenzoic acid. Further, two or more of the above-described terminal structures may be possessed.

Depending on synthesis conditions, a remaining phenolic OH group, which does not react with the end terminator, may be formed as an end group. The smaller the amount of the phenolic OH group is, the better. Specifically, it is preferred that 80 mol% or more of the total amount of the end is blocked with the structure represented by formula (1) above, and it is particularly preferred that 90 mol% or more of the total amount of the end is blocked with the structure represented by formula (1) above.

<Divalent phenol>

The constitutional unit derived from the divalent phenol constituting the polycarbonate resin of the present invention is not particularly limited.

For example, the divalent phenol is preferably a divalent phenol represented by general formula (3) below.

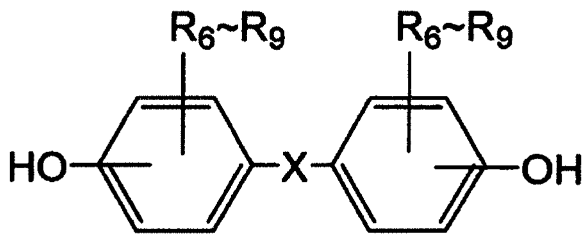

(3)

(In the formula, $R_6$ to $R_9$ each independently represent hydrogen, halogen, nitro, an alkyl group having 1 to 20, preferably 1 to 9 carbon atoms which may have a substituent, an alkoxy group having 1 to 5, preferably 1 to 3 carbon atoms which may have a substituent, an aryl group having 6 to 12, preferably 6 to 8 carbon atoms which may have a substituent, an aralkyl group having 7 to 17, preferably 7 to 12 carbon atoms which may have a substituent, or an alkenyl group having 2 to 15, preferably 2 to 5 carbon atoms which may have a substituent. Substituents which may be had are halogen, an alkyl group having 1 to 20 carbon atoms and an aryl group having 6 to 12 carbon atoms. X represents -O-, -S-, -SO-, $-SO_2-$, -CO-, or a divalent group represented by any of formulae (4) to (7) below.)

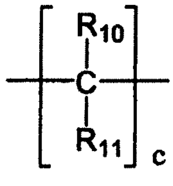 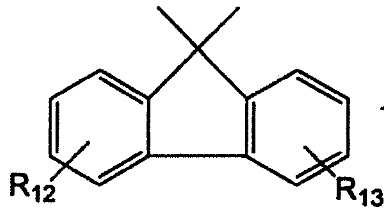 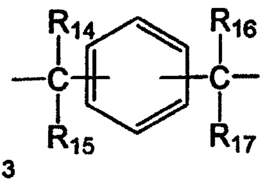 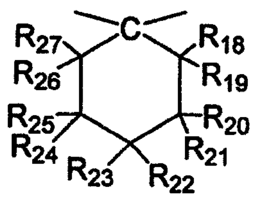

(4). (5) (6) (7)

(In the formulae, $R_{10}$ and $R_{11}$ each independently represent hydrogen, halogen, an alkyl group having 1 to 20, preferably 1 to 9 carbon atoms which may have a substituent, an alkoxy group having 1 to 5, preferably 1 to 3 carbon atoms which may have a substituent, an aryl group having 6 to 12, preferably 6 to 8 carbon atoms which may have a substituent, an aralkyl group having 7 to 17, preferably 7 to 12 carbon atoms which may have a substituent, or an alkenyl group having 2 to 15, preferably 2 to 5 carbon atoms which may have a substituent. Substituents which may be had are halogen, an alkyl group having 1 to 20 carbon atoms and an aryl group having 6 to 12 carbon atoms. Alternatively, $R_{10}$ and $R_{11}$ may be bonded to each other to form a carbocyclic ring having 3 to 20, preferably 3 to 12 carbon atoms or a heterocyclic ring having 1 to 20, preferably 1 to 12 carbon atoms.

c represents an integer of 0 to 20, and preferably an integer of 1 to 12.

$R_{12}$ and $R_{13}$ each independently represent hydrogen, halogen, an alkyl group having 1 to 20, preferably 1 to 9 carbon atoms which may have a substituent, an alkoxy group having 1 to 5, preferably 1 to 3 carbon atoms which may have a substituent, an aryl group having 6 to 12, preferably 6 to 8 carbon atoms which may have a substituent, an aralkyl group having 7 to 17, preferably 7 to 12 carbon atoms which may have a substituent, or an alkenyl group having 2 to 15, preferably 2 to 5 carbon atoms which may have a substituent. Substituents which may be had are halogen, an alkyl group having 1 to 20 carbon atoms and an aryl group having 6 to 12 carbon atoms. Alternatively, $R_{12}$ and $R_{13}$ may be bonded to each other to form a carbocyclic ring having 3 to 20, preferably 3 to 12 carbon atoms or a heterocyclic ring having 1 to 20, preferably 1 to 12 carbon atoms.

$R_{14}$ to $R_{17}$ each independently represent hydrogen, halogen, an alkyl group having 1 to 20, preferably 1 to 9 carbon atoms which may have a substituent, an alkoxy group having 1 to 5, preferably 1 to 3 carbon atoms which may have a substituent, an aryl group having 6 to 12, preferably 6 to 8 carbon atoms which may have a substituent, an aralkyl group having 7 to 17, preferably 7 to 12 carbon atoms which may have a substituent, or an alkenyl group having 2 to 15, preferably 2 to 5 carbon atoms which may have a substituent. Substituents which may be had are halogen, an alkyl group having 1 to 20 carbon atoms and an aryl group having 6 to 12 carbon atoms. Alternatively, $R_{14}$ and $R_{15}$, and $R_{16}$ and $R_{17}$, respectively, may be bonded to each other to form a carbocyclic ring having 3 to 20, preferably 3 to 12 carbon atoms or a heterocyclic ring having 1 to 20, preferably 1 to 12 carbon atoms.

Further, $R_{18}$ to $R_{27}$ each independently represent a hydrogen atom or an alkyl group having 1 to 3 carbon atoms, and at least one, preferably 3 of $R_{18}$ to $R_{27}$ are an alkyl group having 1 to 3 carbon atoms.)

Examples of the divalent phenol of general formula (3) above include 2,2-bis(4-hydroxyphenyl)propane (i.e., "bisphenol A"), bis(4-hydroxyphenyl)-p-diisopropylbenzene, 4,4'-dihydroxydiphenyl, 2,2-bis(4-hydroxy-3,5-dimethylphenyl)propane, 2,2-bis(4-hydroxy-3-methylphenyl)propane, 2,2-bis(4-hydroxy-3,5-diethylphenyl)propane, 2,2-bis(4-hydroxy-3-ethylphenyl)propane, 2,2-bis(4-hydroxy-3,5-diphenylphenyl)propane, 2,2-bis(4-hydroxy-3-phenylphenyl)propane, 2,2-bis(4-hydroxy-3,5-dibromophenyl)propane, 2,2-bis(4-hydroxy-3-bromophenyl)propane, 2,2-bis(4-hydroxyphenyl)pentane, 2,4'-dihydroxy-diphenylmethane, bis-(4-hydroxy-3 -methylphenyl)methane, bis-(4-hydroxy-3-nitrophenyl)methane, 1,1-bis(4-hydroxyphenyl)ethane, 1,1-bis(4-hydroxy-3-methylphenyl)ethane, 3,3-bis(4-hydroxyphenyl)pentane, 1,1-bis(4-hydroxyphenyl)cyclohexane (i.e., "bisphenol Z"), bis(4-hydroxyphenyl)sulfone, 2,4'-dihydroxydiphenyl sulfone, bis(4-hydroxyphenyl)sulfide, 4,4'-dihydroxydiphenyl ether, 4,4'-dihydroxy-3,3'-dimethyldiphenyl ether, 4,4'-dihydroxy-2,5-diethoxydiphenyl ether, 1-phenyl-1,1-bis(4-hydroxyphenyl)ethane, 1,1-bis(4-hydroxy-3-methylphenyl)cyclohexane, 1-phenyl-1,1-bis(4-hydroxy-3-methylphenyl)ethane, bis(4-hydroxyphenyl)diphenylmethane, bis(4-hydroxy-3-methylphenyl)diphenylmethane, 9,9-bis(4-hydroxyphenyl)fluorene, 9,9-bis(4-hydroxy-3-methylphenyl)fluorene and 2,2-bis(4-hydroxyphenyl)hexafluoropropane. In terms of the balance between mechanical properties and heat characteristics, preferred are bis(4-hydroxyphenyl)alkanes, and particularly preferred is 2,2-bis(4-hydroxyphenyl)propane, i.e., "bisphenol A". These divalent phenols may be used solely, or two or more of them may be used as a mixture.

<Molecular weight>

The viscosity average molecular weight of the polycarbonate resin of the present invention is preferably 12,000 to 35,000, more preferably 15,000 to 32,000, even more preferably 20,000 to 30,000, and particularly preferably 22,000

to 28,000.

When the viscosity average molecular weight is 35,000 or less, good moldability is obtained.

When the viscosity average molecular weight is 12,000 or more, good mechanical strength, moldability, etc. are obtained.

The viscosity average molecular weight (Mv) of the polycarbonate resin can be measured according to the below-described method.

<Conditions for measuring viscosity average molecular weight (Mv)>

Measurement apparatus: Ubbelohde capillary viscometer
Solvent: dichloromethane
Concentration of resin solution: 0.5 gram/deciliter
Measurement temperature: 25°C

The measurement is carried out under the above-described conditions to determine a limiting viscosity [η] deciliter/gram with a Huggins constant of 0.45, thereby calculating the viscosity average molecular weight according to the below-described formula.

$$\eta = 1.23 \times 10^{-4} \times Mv^{0.83}$$

<Moist heat resistance>

The moist heat resistance of the polycarbonate resin of the present invention can be evaluated by measuring the change in the viscosity average molecular weight of a molded piece before and after a pressure cooker test.

<Conditions for pressure cooker test>

Apparatus: KTS-2322 manufactured by ALP Co., Ltd.
Conditions: 110°C, 100%RH, 6 hours

The change in the viscosity average molecular weight of the polycarbonate resin of the present invention before and after the pressure cooker test is preferably 1000 or less, and more preferably 500 or less.

When the change in the viscosity average molecular weight of the polycarbonate resin of the present invention before and after the pressure cooker test is more than 1000, moist heat resistance is poor, and the polycarbonate resin may be deteriorated in a short period of time when used in an outdoor environment. When the change is 500 or less, moist heat resistance is high, and the degree of deterioration is low even in the case of use in an outdoor environment.

<Other resins>

In the polycarbonate resin of the present invention, resins other than the polycarbonate resin of the present invention may be contained according to need. Examples of the other resins include: a thermoplastic polyester resin such as a polycarbonate resin other than the polycarbonate resin to be used in the present invention, a polyethylene terephthalate resin (PET resin), polytrimethylene terephthalate (PTT resin) and a polybutyrene terephthalate resin (PBT resin); a styrene-based resin such as a polystyrene resin (PS resin), a high impact polystyrene resin (HIPS), an acrylonitrile-styrene copolymer (AS resin) and a methyl methacrylate-styrene copolymer (MS resin); a core/shell type elastomer such as a methyl methacrylate-acrylic rubber-styrene copolymer (MAS); an elastomer such as a polyester-based elastomer; a polyolefin resin such as a cyclic cycloolefin resin (COP resin) and a cyclic cycloolefin (COP) copolymer resin; a polyamide resin (PA resin); a polyimide resin (PI resin); a polyetherimide resin (PEI resin); a polyurethane resin (PU resin); a polyphenylene ether resin (PPE resin); a polyphenylene sulfide resin (PPS resin); a polysulfone resin (PSU resin); a polymethacrylate resin (PMMA resin); and polycaprolactone.

The blending ratio of other resin components in the polycarbonate resin of the present invention is preferably 10% by mass or less, and more preferably 1% by mass or less of all the resin components. When the ratio of the other

resin components is more than 10% by mass, physical properties may be impaired.

<Additives>

Various additives may be blended in the polycarbonate resin of the present invention without departing from the gist of the present invention. Examples of such additives include at least one additive selected from the group consisting of a thermal stabilizer, an antioxidant, a flame retardant, a flame retardant auxiliary agent, an ultraviolet absorber, a mold release agent and a coloring agent.

Moreover, an antistatic agent, a fluorescent brightener, an antifog additive, a flowability improving agent, a plasticizer, a dispersing agent, an antimicrobial agent, etc. may also be added as long as desired physical properties are not significantly impaired.

<Method for producing polycarbonate resin>

The method for producing the polycarbonate resin of the present invention is characterized in that a reaction raw material containing the monovalent phenol represented by general formula (1), wherein the content of the alcohol represented by general formula (2) is 5000 ppm or less, the divalent phenol, and a carbonate bonding agent is reacted.

<Content of alcohol in monovalent phenol>

As described above, the monovalent phenol of the present invention acts as an end terminator and is represented by the aforementioned general formula (1), and specifically, it is as described above. Further, the alcohol represented by general formula (2) is an impurity derived from a raw material of the end terminator. In this embodiment, the amount of the alcohol of general formula (2) as an impurity contained in the monovalent phenol of general formula (1) is 5000 ppm or less.

The content of the alcohol of general formula (2) in the monovalent phenol of general formula (1) is preferably 1 ppm to 5000 ppm. The content of the alcohol of general formula (2) in the monovalent phenol of general formula (1) is more preferably 1 ppm to 3000 ppm.

When the content of the alcohol of general formula (2) in the monovalent phenol of general formula (1) is more than 5000 ppm, the content of the alcohol of general formula (2) in the polycarbonate resin produced using the monovalent phenol of general formula (1) is also high, and moist heat resistance of the polycarbonate resin may be poor. In addition, the generation of gas in an extruder and a die and contamination of an extrusion roll during extrusion molding of the polycarbonate resin may be severe, and the productivity may be significantly reduced. When the content of the alcohol of general formula (2) in the monovalent phenol is 3000 ppm or less, the content of the alcohol of general formula (2) in the polycarbonate resin is also sufficiently low, and it is particularly preferred. In terms of purification techniques, it is difficult to adjust the content of the alcohol of general formula (2) in the monovalent phenol to less than 1 ppm. Further, even if the content is less than 1 ppm, there is no significant difference of physical properties of a polycarbonate resin produced between the case where the content is less than 1 ppm and the case where the content is 1 to 3000 ppm.

The method for adjusting the content of the alcohol represented by general formula (2) in the monovalent phenol represented by general formula (1) within the above-described range is not particularly limited. Examples of the method include a method of reducing the content of the alcohol represented by general formula (2) by purification of the monovalent phenol. Specifically, one embodiment of the present invention includes purification of the monovalent phenol prior to the reaction of the reaction raw material.

The method for purifying the monovalent phenol is not particularly limited, and examples thereof include recrystallization, distillation and reprecipitation. Among them, the purification preferably includes recrystallization of the monovalent phenol in terms of the productivity. By performing recrystallization, a high-purity monovalent phenol (in particular, the content of the alcohol represented by general formula (2) is reduced) can be obtained according to a convenient method. Specifically, the monovalent phenol represented by general formula (1) is completely dissolved in a recrystallization solvent, and after that, it is cooled to perform crystallization, and it is subjected to filtration and collection, thereby obtaining a purified monovalent phenol.

The recrystallization solvent is not particularly limited. Examples thereof include aromatic hydrocarbon-based solvents such as benzene, toluene and xylene, aliphatic hydrocarbon-based solvents such as pentane, hexane, heptane, octane, pentene and cyclohexane, ketones such as acetone, methyl ethyl ketone, diethyl ketone and methyl isobutyl ketone, alcohols such as methanol, ethanol, propanol, butanol, pentanol, benzyl alcohol and cyclohexanol, ethers such as diethyl ether, dioxane, dioxolane and diphenyl ether, esters such as methyl formate, ethyl formate, butyl formate, methyl acetate, ethyl acetate and butyl acetate, acetonitrile, pyridine, chlorobenzene, dichlorobenzene, methylene chloride, chloroform, carbon tetrachloride and tetrahydrofuran. Two or more of these solvents may be used as a mixture. Among them, preferred are aromatic hydrocarbon-based solvents such as benzene, toluene and xylene in terms of a

large difference between the solubility of the monovalent phenol represented by general formula (1) and the solubility of the alcohol represented by general formula (2).

The temperature of the recrystallization solvent in which the monovalent phenol is dissolved is preferably 30°C to 70°C in terms of a large difference between the solubility of the monovalent phenol represented by general formula (1) and the solubility of the alcohol represented by general formula (2). Further, the cooling temperature is preferably 0°C to 30°C in terms of a large difference between the solubility of the monovalent phenol represented by general formula (1) and the solubility of the alcohol represented by general formula (2).

Further, at the time of recrystallization and purification, usually-used activated carbon and/or an auxiliary agent such as activated clay may be used in combination according to need.

The above-described recrystallization may be performed once or a plurality of times. By performing the recrystallization twice or more, the content of the alcohol represented by general formula (2) in the monovalent phenol can be further reduced, and as a result, it is possible to obtain a polycarbonate resin in which the amount of the alcohol of general formula (2) is further reduced.

<Synthesis method>

The polycarbonate resin of the present invention is produced by reacting a reaction raw material containing the monovalent phenol represented by general formula (1), the divalent phenol and a carbonate bonding agent. The monovalent phenol represented by general formula (1) and the divalent phenol are as described above.

<Carbonate bonding agent>

Examples of the carbonate bonding agent of the present invention include phosgene, triphosgene, carbonic acid diester, and a carbonyl-based compound such as carbon monoxide or carbon dioxide.

Examples of the method for synthesizing the polycarbonate resin of the present invention include various synthesis methods including the interfacial polymerization method, the pyridine method and the transesterification method. Preferred is the interfacial polymerization method, which is advantageous for controlling the terminal.

Regarding a reaction according to the interfacial polymerization method, usually, pH is kept at 10 or higher in the presence of a reaction-inert organic solvent and an alkali aqueous solution, and the reaction raw material containing the divalent phenol and the monovalent phenol as the end terminator, and according to need, an antioxidant to be used for preventing oxidation of the divalent phenol and a phosgene or triphosgene as the carbonate bonding agent, is mixed, and then a polymerization catalyst such as a tertiary amine or quaternary ammonium salt is added to perform interfacial polymerization, thereby obtaining an aromatic polycarbonate resin. Addition of the end terminator is not particularly limited as long as it is carried out during the period between the phosgenation and the initiation of polymerization reaction. The reaction temperature is 0 to 35°C, and the reaction time is several minutes to several hours.

In this regard, examples of the reaction-inert organic solvent include a chlorinated hydrocarbon such as dichloromethane, 1,2-dichloroethane, chloroform, monochlorobenzene and dichlorobenzene, and an aromatic hydrocarbon such as benzene, toluene and xylene. Examples of the polymerization catalyst include: tertiary amines such as trimethylamine, triethylamine, tributylamine, tripropylamine, trihexylamine and pyridine; and quaternary ammonium salts such as trimethylbenzylammonium chloride, tetramethylammonium chloride and triethylbenzylammonium chloride.

Flakes of the polycarbonate resin can be obtained, for example: by dropping a dichloromethane solution containing the aromatic polycarbonate resin obtained by the interfacial polymerization method into warm water with its temperature being kept at 45°C and then removing the solvent by evaporation; or by putting the dichloromethane solution containing the aromatic polycarbonate resin obtained by the interfacial polymerization method into methanol and filtering and drying the precipitated polymer; or by agitating the dichloromethane solution containing the polycarbonate resin obtained by the interfacial polymerization method with a kneader while agitating and pulverizing it with the temperature being kept at 40°C and then removing the solvent from the resultant with hot water at 95°C or higher.

A reaction according to the transesterification method is a transesterification reaction between a carbonic acid diester as the carbonate bonding agent and the divalent phenol. Usually, the molecular weight and the amount of terminal hydroxyl groups of a desired aromatic polycarbonate resin are determined by adjusting the mixing ratio between a carbonic acid diester and an aromatic dihydroxy compound and adjusting the pressure reducing degree during the reaction. The amount of terminal hydroxyl groups significantly affects thermal stability, hydrolytic stability, color tone, etc. of the aromatic polycarbonate resin, and for imparting practical physical properties, the amount is preferably 1000 ppm or less, and more preferably 700 ppm or less. The carbonic acid diester is used generally in an equimolar amount or more, and preferably in an amount of 1.01 to 1.30 mol relative to 1 mol of the aromatic dihydroxy compound.

Examples of the carbonic acid diester include: a dialkyl carbonate compound such as dimethyl carbonate, diethyl carbonate and di-tert-butyl carbonate; and diphenyl carbonate or a substituted diphenyl carbonate such as di-p-tolyl carbonate, phenyl-p-tolyl carbonate and di-p-chlorophenyl carbonate. Among them, diphenyl carbonate and the

substituted diphenyl carbonate are preferred, and diphenyl carbonate is particularly preferred. These carbonic acid diester compounds may be used solely, or two or more of them may be used as a mixture.

When synthesizing the aromatic polycarbonate resin by means of the transesterification method, a transesterification catalyst is usually used. The transesterification catalyst is not particularly limited, but an alkali metal compound and/or an alkaline earth metal compound is mainly used. Further, a basic compound such as a basic boron compound, a basic phosphorus compound, a basic ammonium compound or an amine-based compound can be supplementally used in combination. Examples of the transesterification reaction using such raw materials include a method in which: a mixture of a divalent phenol, a monovalent phenol (end terminator) and a carbonic acid diester is supplied to a reactor under melting conditions to perform a reaction at a temperature of 100 to 320°C; and finally, a melt polycondensation reaction is performed while removing by-products such as an aromatic hydroxy compound under a reduced pressure of $2.7 \times 10^2$ Pa (2 mmHg) or less. Either a batch type or continuous type melt polycondensation reaction can be performed. From the viewpoint of stability, etc., continuous type melt polycondensation is preferably employed for the aromatic polycarbonate resin to be used in the present invention. In the transesterification method, a compound for neutralizing a catalyst, for example, a sulfur-containing acidic compound or derivative made therefrom is preferably used as a deactivator for the catalyst in the aromatic polycarbonate resin. The amount of the deactivator is 0.5 to 10 equivalents, and preferably 1 to 5 equivalents of an alkali metal of the catalyst, and it is added to the aromatic polycarbonate resin in an amount of usually 1 to 100 ppm, and preferably 1 to 20 ppm.

As described above, the polycarbonate resin of the present invention can be produced according to a conventional method, and therefore the present invention is industrially useful.

<Polymerization degree and use amount of monovalent phenol (end terminator)>

The molecular weight of the polycarbonate resin of the present invention is controlled by the use amount of the monovalent phenol (end terminator).

The polymerization degree of the divalent phenol (for example, represented by general formula (3) above) to be used for the main skeleton and the use amount of the monovalent phenol (end terminator) are shown by the below-described formula.

$$\text{Use amount of monovalent phenol (end terminator) (mol)} \\ = \text{Use amount of divalent phenol (mol)} \div \text{Polymerization degree of main skeleton} \times 2$$

The use amount of the monovalent phenol and the use amount of the divalent phenol are determined based on this formula, but the range of the use amount of the divalent phenol (mol): the use amount of the monovalent phenol (end terminator) (mol) is preferably 50:1 to 5:1, and more preferably 40:1 to 9:1.

For obtaining an aromatic polycarbonate resin having a branch structure, a polyhydroxy compound such as phloroglucin, 4,6-dimethyl-2,4,6-tris(4-hydroxyphenyl)heptene-2,4,6-dimethyl-2,4,6-tris(4-hydroxyph enyl)heptane, 2,6-dimethyl-2,4,6-tris(4-hydroxyphenyl)heptene-3,1,3,5-tris(4-hydroxyphenyl)benzene and 1,1,1-tris(4-hydroxyphenyl)ethane, or 3,3-bis(4-hydroxyaryl)oxyindole (i.e., "isatin bisphenol"), 5-chlorisatin bisphenol, 5,7-dichlorisatin bisphenol, 5-bromisatin bisphenol or the like may be used in combination with the above-described divalent phenol. The use amount is 0.01 to 10 mol%, and preferably 0.1 to 3 mol% relative to the divalent phenol.

<Sheet/film and method for production thereof>

The method for producing the sheet/film of the present invention is not particularly limited, and extrusion molding and cast molding can be applied thereto. Preferred is extrusion molding in terms of the productivity. As described above, according to the present invention, problems regarding the generation of gas in an extruder and a die and contamination of an extrusion roll during extrusion molding, which conventionally occur in the case of a polycarbonate resin having a terminal structure derived from the monovalent phenol represented by general formula (1), are solved, and it is possible to provide a polycarbonate having high moist heat resistance.

The polycarbonate resin of the present invention is particularly suitably used for the case where a pellet, flake or powder of a resin obtained by adding additives to the polycarbonate resin is melted and kneaded by an extruder and then extruded from a die or the like, and a sheet in a semi-melted state obtained is cooled and solidified while being compressed by a polishing roll or the like to provide a product. The extruder may be either a single screw extruder or a twin screw extruder, and may be with or without a vent.

<Molded product and intended use>

The molded product of the present invention is a molded product containing the polycarbonate resin of the present invention including the above-described various preferred embodiments and constitutions. The shape, pattern, color, size, etc. of the molded product are not limited, and may be arbitrarily determined according to the intended use thereof. Specific examples of thermally molded bodies include electrical and electronic equipments, office automation equipments, information terminal devices, machine components, home appliances, vehicle components, building components, various containers, leisure goods/sundries, components for lighting equipments, components for various household electric appliances, housings, containers, covers, storage parts and cases of electrical appliances, and covers and cases of lighting equipments. Examples of the electrical and electronic equipments include personal computers, game machines, television receivers, display units such as liquid crystal display devices and plasma display devices, printers, copy machines, scanners, facsimiles, electronic organizers, PDAs, electronic desk calculators, electronic dictionaries, cameras, video cameras, mobile telephones, smartphones, tablets, battery packs, drives and readers of storage media, mouse devices, numeric keypads, CD players, MD players and portable radio sets/audio players. Further, examples of the molded bodies also include illuminated billboards, liquid crystal backlights, lighting displays, traffic signs, signboards, screens, automobile components such as reflectors and meter parts, toys and ornaments.

EXAMPLES

Hereinafter, the present invention will be described in detail based on working examples, but the present invention is not limited thereto. Various numerical values and materials in the working examples are provided only for illustrative purposes.

The viscosity average molecular weight (Mv) of the polycarbonate resin of the present invention was measured based on the below-described measurement conditions.

<Conditions for measuring viscosity average molecular weight (Mv)>

Measurement apparatus: Ubbelohde capillary viscometer
Solvent: dichloromethane
Concentration of resin solution: 0.5 gram/deciliter
Measurement temperature: 25°C

The measurement was carried out under the above-described conditions to determine a limiting viscosity [η] deciliter/gram with a Huggins constant of 0.45, and calculation was made according to the below-described formula.

$$\eta = 1.23 \times 10^{-4} \times Mv^{0.83}$$

<Content of alcohol>

The content of the alcohol of general formula (2) in the polycarbonate resin of the present invention and the monovalent phenol (end terminator) represented by general formula (1) or general formula (8) was measured based on the below-described measurement conditions using a high performance liquid chromatography time-of-flight mass spectrometer (LC-Tof-MS).

<Measurement conditions of LC-Tof-MS>

- LC conditions for measurement of monovalent phenol (end terminator)

LC: Waters Acquity UPLC H-Class

Column: SSC PEGASIL C4 (inner diameter: 4.6 mm, length: 250 mm, particle diameter: 5 μm)

Temperature: 40°C

Flow rate: 1.0 mL/min

Detector: PDA (190 to 400 nm)

Injection amount: 25 μL

Eluant: $H_2O$/MeCN = 2/8 (isocratic)

- LC conditions for measurement of polycarbonate resin

LC: Waters Acquity UPLC H-Class

Column: SSC PEGASIL C4
(inner diameter: 4.6 mm, length: 250 mm, particle diameter: 5 μm)

Temperature: 40°C

Flow rate: 1.0 mL/min

Detector: PDA (190 to 400 nm)

Injection amount: 5 μL

Eluant: A: $H_2O$, B: MeCN, C: THF

Table 2

| Gradient program (unit: %) | | | |
|---|---|---|---|
| time | A | B | C |
| 0.00 | 20 | 80 | 0 |
| 12.00 | 20 | 80 | 0 |
| 12.01 | 0 | 0 | 100 |
| 25.00 | 0 | 0 | 100 |

- MS conditions for measurement of monovalent phenol (end terminator) and polycarbonate resin

MS: Waters Xevo G2-S Tof

Scan range/speed: 50 to 1200/1.0 sec

Ionization method: APCI (+)

Analysis mode: Sensitivity mode

Dynamic range: Normal

Corona current: 3 μA

Sampling cone voltage: 30 V

Source Offset: 80

Collision energy: off

Source temperature: 150°C

IonSabreProbe temperature: 500°C

Cone gas flow rate: 50 L/min

Desolvation gas flow rate: 1200 L/min

Internal standard substance (mass correction): Leucine Enkephalin, 1 ng/μL

Internal standard flow rate: 10 μL/min

<Moist heat resistance>

The moist heat resistance of the polycarbonate resin of the present invention was evaluated by measuring the change in the viscosity average molecular weight of a molded piece before and after a pressure cooker test.

<Conditions for preparation of molded piece>

Apparatus: SG-75 manufactured by Sumitomo Heavy Industries, Ltd.
Cylinder temperature: 270°C
Mold temperature: 80°C
Shape of molded piece: dumbbell-shaped piece

<Conditions for pressure cooker test>

Apparatus: KTS-2322 manufactured by ALP Co., Ltd.
Conditions: 110°C, 100%RH, 6 hours

The change in the viscosity average molecular weight of the polycarbonate resin of the present invention before and after the pressure cooker test is preferably 1000 or less, and more preferably 500 or less.

When the change in the viscosity average molecular weight of the polycarbonate resin of the present invention before and after the pressure cooker test is more than 1000, moist heat resistance is poor, and the polycarbonate resin may be deteriorated in a short period of time when used in an outdoor environment.

<Conditions for extrusion molding>

The polycarbonate resin of the present invention was formed into a film by extrusion molding under the below-described conditions using a twin screw extruder. Extruder: TEM26DS manufactured by Toshiba Machine Co., Ltd.

Screw diameter: 28.2 mm
Extruder temperature: 270°C
Die width: 330 mm
Die temperature: 270°C

<Productivity of sheet/film>

The productivity of the sheet/film when using the polycarbonate resin of the present invention was evaluated

by observing the generation of gas in an extruder and a die and contamination of an extrusion roll in extrusion molding under the above-described extrusion molding conditions.

Extrusion molding was carried out under the above-described extrusion molding conditions for 8 hours. The case where the generation of gas in an extruder and a die and contamination of an extrusion roll were scarcely observed was evaluated as "particularly good". The case where the generation of gas in an extruder and a die and contamination of an extrusion roll were slightly observed was evaluated as "good". The case where the generation of gas in an extruder and a die and contamination of an extrusion roll were significantly observed was evaluated as "poor".

<Production Example 1>

Based on Handbook of Organic Chemistry (in Japanese) (3rd edition; edited by The Society of Synthetic Organic Chemistry; published by Gihodo Shuppan Co., Ltd.; pages 143-150), esterification by a dehydration reaction was performed using 4-hydroxybenzoic acid manufactured by Tokyo Chemical Industry Co., Ltd. and 1-hexadecanol manufactured by Tokyo Chemical Industry Co., Ltd. to obtain a p-hydroxybenzoic acid hexadecyl ester (CEPB).

The content of 1-hexadecanol in the obtained CEPB was 15000 ppm.

<Production Example 2>

The CEPB obtained in Production Example 1 was dissolved in toluene in a warm water bath at 60°C. After complete dissolution was confirmed, the CEPB solution was taken out from the warm water bath and cooled to 10°C in a water bath to precipitate CEPB. The obtained CEPB slurry solution was subjected to suction filtration, and toluene was distilled away from a solid body, thereby obtaining purified CEPB.

The content of 1-hexadecanol in the obtained purified CEPB was 4500 ppm.

<Production Example 3>

The purified CEPB obtained in Production Example 2 was again dissolved in toluene in a warm water bath at 60°C. After complete dissolution was confirmed, the CEPB solution was taken out from the warm water bath and cooled to 10°C in a water bath to precipitate CEPB. The obtained CEPB slurry solution was subjected to suction filtration, and toluene was distilled away from a solid body, thereby obtaining repurified CEPB.

The content of 1-hexadecanol in the obtained repurified CEPB was 2800 ppm.

<Example 1>

7.1 kg (31.14 mol) of bisphenol A (BPA) manufactured by Nippon Steel & Sumikin Chemical Co., Ltd. and 30 g of hydrosulfite as an antioxidant were added to and dissolved in 57.2 kg of 9% (w/w) aqueous solution of sodium hydroxide. 40 kg of dichloromethane was added thereto, and 4.33 kg of phosgene was blown into the solution over 30 minutes while stirring with the solution temperature being held at 15°C to 25°C.

After the blowing of phosgene was completed, 6 kg of 9% (w/w) aqueous solution of sodium hydroxide, 11 kg of dichloromethane, and a solution obtained by dissolving 443 g (1.22 mol) of the repurified CEPB obtained in Production Example 3 in 10 kg of dichloromethane were added thereto, and the mixture was vigorously stirred to be emulsified. After that, 10 ml of triethylamine as a polymerization catalyst was added thereto to perform polymerization for about 40 minutes.

The polymerization solution was separated into an aqueous phase and an organic phase, and the organic phase was neutralized with phosphoric acid and repeatedly washed with pure water until pH of the washing solution became neutral. The organic solvent was distilled away from the purified polycarbonate resin solution, thereby obtaining polycarbonate resin powder.

Using the obtained polycarbonate resin powder, the viscosity-average molecular weight and the content of alcohol were measured. The viscosity-average molecular weight was 27400, and the content of 1-hexadecanol was 150 ppm.

In addition, using the above-described extruder, the obtained polycarbonate powder was melt-molded to obtain a dumbbell-shaped piece.

Using the obtained dumbbell-shaped piece, the pressure cooker test was conducted under the above-described conditions. The change in the viscosity average molecular weight before and after the test was measured, and it was 100.

In addition, using the above-described twin screw extruder, the obtained polycarbonate resin powder was melt-extruded and pushed out from a T-die to provide a film-like shape, and after that, it was cooled using a mirror surface roll at 120°C to obtain a film having a thickness of 180 μm.

The above-described film production by means of extrusion molding was carried out for 8 hours. The generation

of gas in the extruder and die and contamination of the extrusion roll were scarcely observed, and it was "particularly good".

<Example 2>

The operation was carried out in a manner similar to that in Example 1, except that the repurified CEPB was changed to the purified CEPB obtained in Production Example 2, thereby obtaining polycarbonate resin powder.

The viscosity average molecular weight of the obtained polycarbonate resin powder was 27500, and the content of 1-hexadecanol therein was 240 ppm.

Using the obtained polycarbonate resin powder, the operation was carried out in a manner similar to that in Example 1 to measure the change in the viscosity average molecular weight before and after the pressure cooker test, and it was 600.

Using the obtained polycarbonate resin powder, the operation was carried out in a manner similar to that in Example 1 to carry out the film production by means of extrusion molding for 8 hours. The generation of gas in the extruder and die and contamination of the extrusion roll were slightly observed, and it was "good".

<Comparative Example 1>

The operation was carried out in a manner similar to that in Example 1, except that the repurified CEPB was changed to the CEPB obtained in Production Example 1, thereby obtaining polycarbonate resin powder.

The viscosity average molecular weight of the obtained polycarbonate resin powder was 27600, and the content of 1-hexadecanol therein was 795 ppm.

Using the obtained polycarbonate resin powder, the operation was carried out in a manner similar to that in Example 1 to measure the change in the viscosity average molecular weight before and after the pressure cooker test, and it was 5400.

Using the obtained polycarbonate resin powder, the operation was carried out in a manner similar to that in Example 1 to carry out the film production by means of extrusion molding for 8 hours. The generation of gas in the extruder and die and contamination of the extrusion roll were significantly observed, and it was "poor".

Table 3

| | Divalent phenol | End terminator | Alcohol content in CEPB (ppm) | Alcohol content in PC (ppm) | Moist heat resistance (change in molecular weight) | Productivity of film |
|---|---|---|---|---|---|---|
| Example 1 | BPA | CEPB | 2800 | 150 | 100 | Particularly good |
| Example 2 | BPA | CEPB | 4500 | 240 | 600 | Good |
| Comparative Example 1 | BPA | CEPB | 15000 | 795 | 5400 | Poor |

As shown in Table 3, the polycarbonate resin of the present invention has higher moist heat resistance and can further suppress the generation of gas in an extruder and a die and contamination of an extrusion roll in extrusion molding when compared to conventional polycarbonate resins. Therefore, according to the present invention, a polycarbonate having high moist heat resistance can be provided, and a sheet/film can be provided with high productivity.

## Claims

1. A polycarbonate resin which has: a terminal structure derived from a monovalent phenol represented by general formula (1); and a constitutional unit derived from a divalent phenol, wherein the content of an alcohol represented by general formula (2) is 500 ppm or less:

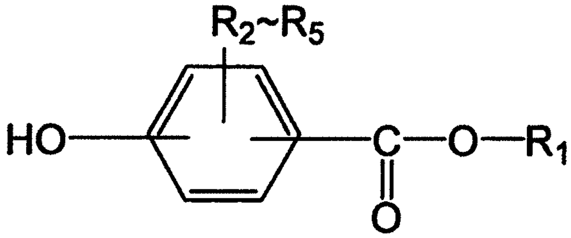

(1)

wherein in general formula (1):

$R_1$ represents an alkyl group having 8 to 36 carbon atoms or an alkenyl group having 8 to 36 carbon atoms; and $R_2$ to $R_5$ each independently represent hydrogen, halogen, an alkyl group having 1 to 20 carbon atoms which may have a substituent, or an aryl group having 6 to 12 carbon atoms which may have a substituent,

$R_1$-OH (2)

and wherein in general formula (2), $R_1$ is the same as $R_1$ in general formula (1).

**2.** The polycarbonate resin according to claim 1, which has a viscosity average molecular weight of 12,000 to 35,000:

**3.** The polycarbonate resin according to claim 1 or 2, wherein the divalent phenol is represented by general formula (3):

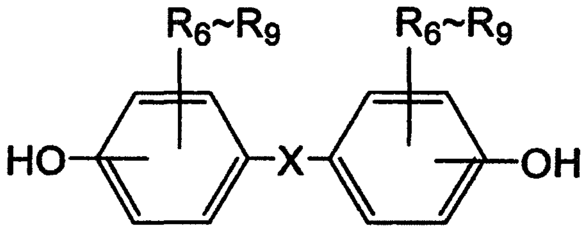

(3)

wherein in general formula (3):

$R_6$ to $R_9$ each independently represent hydrogen, halogen, nitro, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent; and
X represents -O-, -S-, -SO-, $-SO_2-$, -CO-, or a divalent group represented by any of formulae (4) to (7):

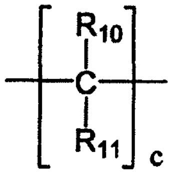
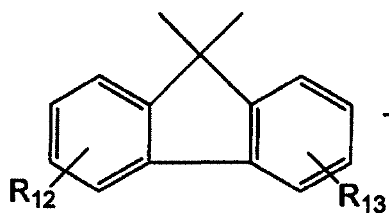
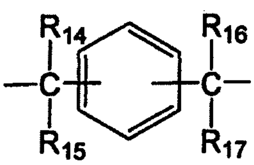
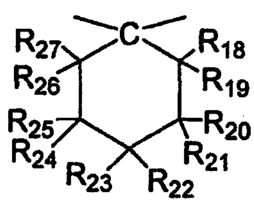

(4) (5) (6) (7)

wherein in formulae (4) to (7):

$R_{10}$ and $R_{11}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,

$R_{10}$ and $R_{11}$ are bonded to each other to form a carbocyclic ring having 3 to 20 carbon atoms or a heterocyclic ring having 1 to 20 carbon atoms;
c represents an integer of 0 to 20;
$R_{12}$ and $R_{13}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{12}$ and $R_{13}$ are bonded to each other to form a carbocyclic ring having 3 to 20 carbon atoms or a heterocyclic ring having 1 to 20 carbon atoms;
$R_{14}$ to $R_{17}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,
$R_{14}$ and $R_{15}$, and $R_{16}$ and $R_{17}$, respectively, are bonded to each other to form a carbocyclic ring having 3 to 20 carbon atoms or a heterocyclic ring having 1 to 20 carbon atoms; and
$R_{18}$ to $R_{27}$ each independently represent a hydrogen atom or an alkyl group having 1 to 3 carbon atoms, and at least one of $R_{18}$ to $R_{27}$ is an alkyl group having 1 to 3 carbon atoms.

**4.** A method for producing a polycarbonate resin, which is **characterized in that** a reaction raw material containing a monovalent phenol represented by general formula (1), wherein the content of an alcohol represented by general formula (2) is 5000 ppm or less, a divalent phenol, and a carbonate bonding agent is reacted:

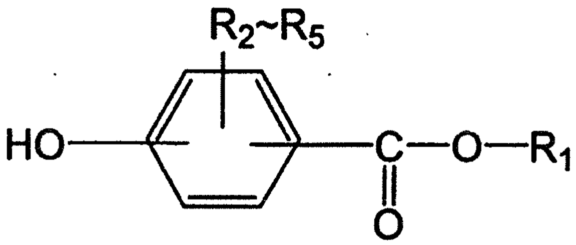
(1)

wherein in general formula (1):

$R_1$ represents an alkyl group having 8 to 36 carbon atoms or an alkenyl group having 8 to 36 carbon atoms; and $R_2$ to $R_5$ each independently represent hydrogen, halogen, an alkyl group having 1 to 20 carbon atoms which may have a substituent, or an aryl group having 6 to 12 carbon atoms which may have a substituent,

$R_1$-OH (2)

and wherein in general formula (2), $R_1$ is the same as $R_1$ in general formula (1).

**5.** The method according to claim 4, wherein the divalent phenol is represented by general formula (3):

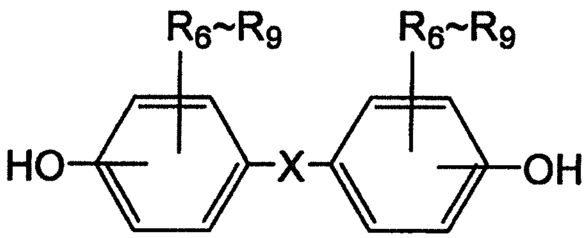
(3)

wherein in general formula (3):

$R_6$ to $R_9$ each independently represent hydrogen, halogen, nitro, an alkyl group having 1 to 20 carbon atoms which may have a substituent, an alkoxy group having 1 to 5 carbon atoms which may have a substituent, an

aryl group having 6 to 12 carbon atoms which may have a substituent, an aralkyl group having 7 to 17 carbon atoms which may have a substituent, or an alkenyl group having 2 to 15 carbon atoms which may have a substituent; and

X represents -O-, -S-, -SO-, $-SO_2-$, -CO-, or a divalent group represented by any of formulae (4) to (7):

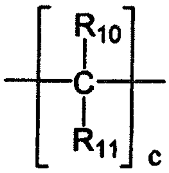

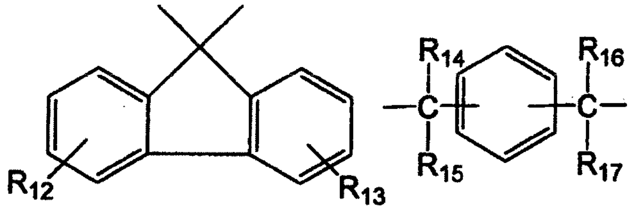

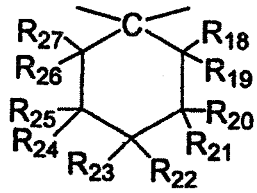

(4) (5) (6) (7)

wherein in formulae (4) to (7):

$R_{10}$ and $R_{11}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,

$R_{10}$ and $R_{11}$ are bonded to each other to form a carbocyclic ring having 3 to 20 carbon atoms or a heterocyclic ring having 1 to 20 carbon atoms;

c represents an integer of 0 to 20;

$R_{12}$ and $R_{13}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,

$R_{12}$ and $R_{13}$ are bonded to each other to form a carbocyclic ring having 3 to 20 carbon atoms or a heterocyclic ring having 1 to 20 carbon atoms;

$R_{14}$ to $R_{17}$ each independently represent hydrogen, halogen, an alkyl group having 1 to 20 carbon atoms which may have a substituent, an alkoxy group having 1 to 5 carbon atoms which may have a substituent, an aryl group having 6 to 12 carbon atoms which may have a substituent, an aralkyl group having 7 to 17 carbon atoms which may have a substituent, or an alkenyl group having 2 to 15 carbon atoms which may have a substituent, or alternatively,

$R_{14}$ and $R_{15}$, and $R_{16}$ and $R_{17}$, respectively, are bonded to each other to form a carbocyclic ring having 3 to 20 carbon atoms or a heterocyclic ring having 1 to 20 carbon atoms; and

$R_{18}$ to $R_{27}$ each independently represent a hydrogen atom or an alkyl group having 1 to 3 carbon atoms, and at least one of $R_{18}$ to $R_{27}$ is an alkyl group having 1 to 3 carbon atoms.

**6.** A molded product obtained by molding the polycarbonate resin according to any one of claims 1 to 3.

**7.** A sheet or film obtained by molding the polycarbonate resin according to any one of claims 1 to 3.

**8.** The sheet or film according to claim 7, wherein said molding is extrusion molding.

**9.** A method for producing a sheet or film, which comprises molding and processing the polycarbonate resin according to any one of claims 1 to 3.

## INTERNATIONAL SEARCH REPORT

International application No.
PCT/JP2016/076903

A. CLASSIFICATION OF SUBJECT MATTER
*C08G64/42*(2006.01)i, *B29C47/00*(2006.01)i, *B29C47/14*(2006.01)i, *B29L7/00*(2006.01)n

According to International Patent Classification (IPC) or to both national classification and IPC

B. FIELDS SEARCHED

Minimum documentation searched (classification system followed by classification symbols)
C08G64/42, B29C47/00, B29C47/14, B29L7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X,Y | WO 2007/132874 A1 (Mitsubishi Gas Chemical Co., Inc.), 22 November 2007 (22.11.2007), claim 1; paragraphs [0065], [0066], [0070] to [0073], [0083] & US 2009/0304977 A1 claim 1; paragraphs [0060], [0061], [0066] to [0072], [0091] & EP 2019121 A1 & CN 101490132 A & KR 10-2009-0057943 A | 1-9 |
| Y | JP 64-74220 A (Mitsubishi Kasei Corp.), 20 March 1989 (20.03.1989), page 6,upper left column, lines 6 to 13 (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November 2016 (14.11.16) | 06 December 2016 (06.12.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2016/076903

C (Continuation). DOCUMENTS CONSIDERED TO BE RELEVANT

| Category* | Citation of document, with indication, where appropriate, of the relevant passages | Relevant to claim No. |
|---|---|---|
| Y | JP 64-75525 A (Mitsubishi Kasei Corp.), 22 March 1989 (22.03.1989), page 5, lower left column, lines 11 to 18 (Family: none) | 1-9 |
| Y | JP 2003-64177 A (Dainippon Ink and Chemicals, Inc.), 05 March 2003 (05.03.2003), paragraph [0005] (Family: none) | 1-9 |
| Y | JP 2014-224244 A (Idemitsu Kosan Co., Ltd.), 04 December 2014 (04.12.2014), paragraph [0021] (Family: none) | 1-9 |
| Y | JP 2005-518460 A (General Electric Co.), 23 June 2005 (23.06.2005), paragraph [0017] & US 2003/0120025 A1 paragraph [0018] & US 6525163 B1 & WO 2003/022905 A1 | 1-9 |
| A | JP 2013-234273 A (ADEKA Corp.), 21 November 2013 (21.11.2013), table 2 & US 2015/0135990 A1 table 2 & WO 2013/168713 A1 & EP 2848646 A1 | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07025871 B
- WO 2007132874 A
- JP 2015184847 A


### Non-patent literature cited in the description


- Handbook of Organic Chemistry. Gihodo Shuppan Co., Ltd, 143-150